# EUROPEAN PATENT APPLICATION

(11) **EP 3 793 131 A1**
(43) Date of publication of application: **17.03.2021**
(21) Application number: 20187882.4
(22) Date of filing: 27.07.2020
(51) Int. Cl.: H04L 9/32

(54) **COMMUNICATION PROGRAM, COMMUNICATION METHOD, AND COMMUNICATION APPARATUS**

(30) Priority: 11.09.2019 JP 2019165021
(71) Applicant: FUJITSU LIMITED, Kanagawa 211-8588 (JP)
(72) Inventor: Horii, Motoshi, Kanagawa, 211-8588 (JP)
(74) Representative: Hoffmann Eitle

(57) **Abstract**

A communication program causing a second communication apparatus that is capable of communicating with a first communication apparatus to perform processes, the processes includes issuing a credential that is used by a user of the first communication apparatus; storing identification information of the credential in association with a second key that is usable for decrypting information encrypted with a first key that is used by the first communication apparatus for encryption; and when signature information attached to an inquiry message inquiring whether a credential identified by the identification information is valid is decryptable with the second key, transmitting information representing whether the credential identified by the identification information is valid to the first communication apparatus.

## Description

### [Technical Field]

The embodiments discussed herein are related to a communication program, a communication method, and a communication apparatus.

### [Background Art]

When using various services such as online shopping, application for issuing a credit card, and opening a bank account, a service user may present a digital credential to a service provider. A digital credential may be issued by a credential authority. In this case, the credential authority performs identity confirmation and the like for a user and issues a credential based on the result. The user presents the obtained digital credential to the service provider. The service provider checks the validity of the credential as appropriate, and when the credential is valid, the service provider provides the service based on the information certified by the credential.

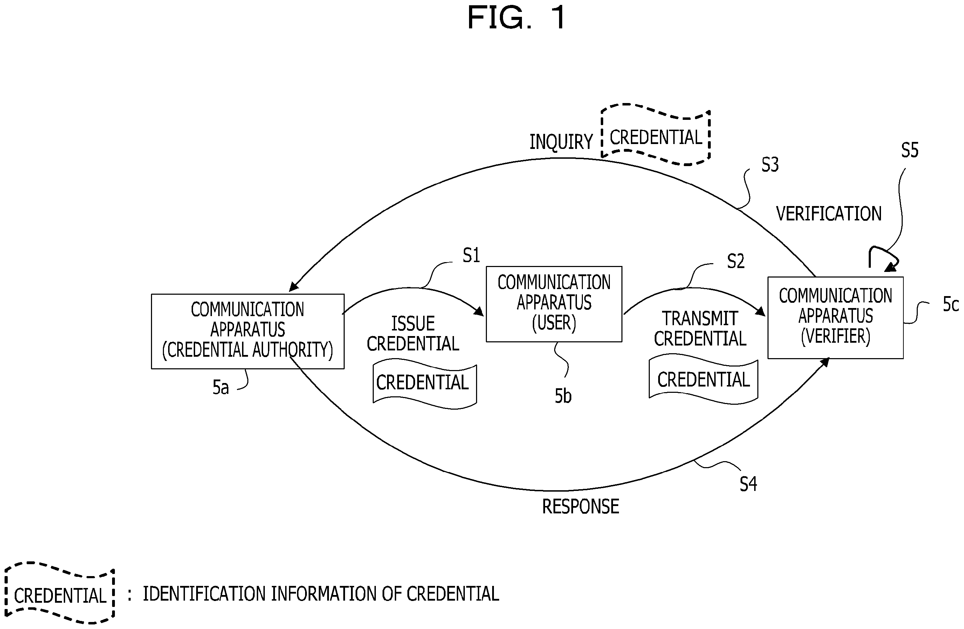

FIG. 1 is a diagram describing an example of processing for checking the validity of a credential. The network illustrated in FIG. 1 includes communication apparatuses 5a to 5c. In the example of FIG. 1, the communication apparatus 5a, which operates as a credential authority, issues the credential of the user of the communication apparatus 5b and transmits the credential to the communication apparatus 5b (step S1). The communication apparatus 5b transmits the credential to the communication apparatus 5c in order to receive the service provided by the communication apparatus 5c (step S2). When providing the service, the communication apparatus 5c inquires about the validity of the credential to the communication apparatus 5a, which is the issuer the credential (step S3). The communication apparatus 5a determines whether the credential is valid, and transmits the determination result to the communication apparatus 5c as a response to the inquiry (step S4).

As a related technique, a system in which a server of a service provider conducts invalidation confirmation request for an attribute credential to an invalidation confirmation station server during credential processing is known (for example, PTL 1). In this system, in a case where the attribute credential is not invalid, it is verified that the relation between the attribute credential and a signature key is established as a formal signature, and the server of the service provider provides the service. A right data distribution apparatus that confirms whether the credential that is checked to have authenticity is contained in an invalidation list has also been proposed (for example, PTL 2). This apparatus enables export permission right data and export prohibition right data to be distributed when the credential is not contained in any invalidation list.

### [Citation List]

### [Patent Literature]

[PTL 1] Japanese Laid-open Patent Publication No. 2007-295430
[PTL 2] Japanese Laid-open Patent Publication No. 2005-275973

### [Summary of Invention]

### [Technical Problem]

Once each of service providers has inquired an issuer of the credential for the validity of each credential, the issuer of the credential is allowed to specify the service the user intends to use through inquiry about the validity of the credential. Since the status of use of a service by a user is information on the privacy of the user, it is not desirable that the status of use is specified by the issuer of the credential. There is also a risk that the status of use of a service specified by the issuer of the credential is leaked from the issuer of the credential. Hence, it is desirable that what kind of service is used by the user using the credential is not specified by the issuer of the credential. This problem is not solved by the techniques described as related techniques.

An object of one aspect is to make it possible to check the validity of a credential in a manner that does not allow an issuer of the credential to speculate the status of use of a service.

### [Solution to Problem]

A communication program according to one aspect is executed in a second communication apparatus that is capable of communicating with a first communication apparatus. The second communication apparatus issues a credential that is used by a user of the first communication apparatus. The second communication apparatus stores identification information of the credential in association with a second key that is usable for decrypting information encrypted with a first key that is used by the first communication apparatus for encryption. The second communication apparatus, in a case where signature information attached to an inquiry message inquiring whether a credential identified by the identification information is valid is decryptable with the second key, transmits information representing whether the credential identified by the identification information is valid to the first communication apparatus.

### [Advantageous Effects of Invention]

It is possible to check the validity of a credential in a manner that does not allow an issuer of the credential to speculate the status of use of a service.

### [Brief Description of Drawings]

FIG. 1 is a diagram describing an example of processing for checking the validity of a credential;
FIG. 2 is a diagram describing an example of a communication method according to an embodiment;
FIG. 3 is a diagram describing an example of a configuration of a communication apparatus;
FIG. 4 is a diagram describing an example of a hardware configuration of the communication apparatus;
FIG. 5 is a diagram describing an example of public key information contained in a distributed ledger;
FIG. 6 is a diagram describing an example of a method of distributing a credential;
FIG. 7 is a diagram describing an example of inquiry processing for the validity of a credential;
FIG. 8 is a diagram describing an example of notification processing for the validity of a credential;
FIG. 9 is a flowchart describing an example of processing conducted by a communication apparatus that issues a credential;
FIG. 10 is a flowchart describing an example of processing conducted by a communication apparatus that is used by a service user;
FIG. 11 is a flowchart describing an example of processing conducted by a communication apparatus that is used by a service provider;
FIG. 12 is a diagram describing an example of a communication method according to an embodiment;
FIG. 13 is a diagram describing an example of inquiry processing for the validity of a credential in a second embodiment;
FIG. 14 is a diagram describing an example of notification processing for the validity of a credential in the second embodiment;
FIG. 15 is a flowchart describing an example of processing conducted by a communication apparatus that is used by a service user; and
FIG. 16 is a flowchart describing an example of processing conducted by a communication apparatus that is used by a service provider.

### [Description of Embodiments]

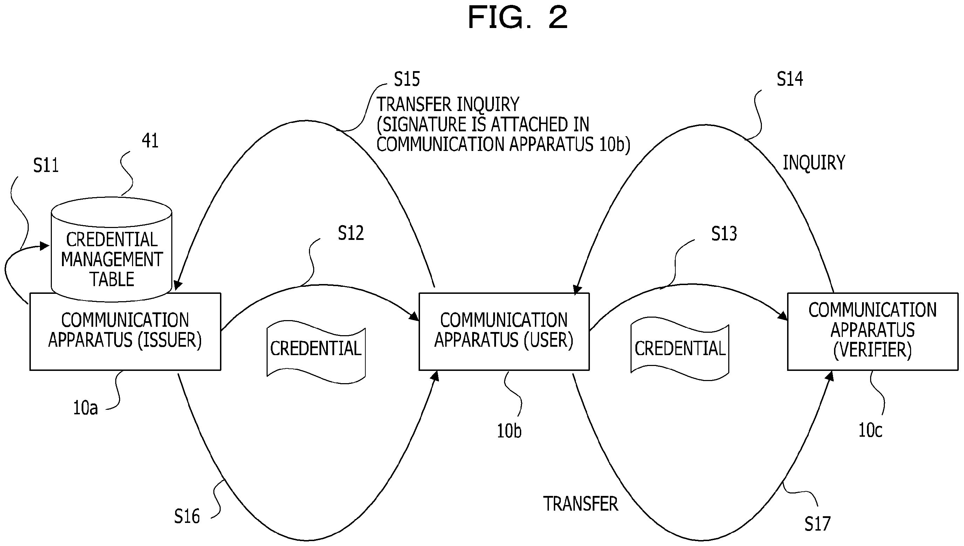

FIG. 2 is a diagram describing an example of a communication method according to an embodiment. In the example illustrated in FIG. 2, communication apparatuses 10a to 10c have participated in the network. In FIG. 2, the communication apparatus 10a is supposed to be a communication apparatus 10 used by the issuer of a credential. The communication apparatus 10b is an apparatus used by a user who is about to use a service, and the communication apparatus 10c is a communication apparatus 10 used by a verifier for the credential. Each communication apparatus 10 in the network is supposed to be capable of acquiring a public key paired with a secret key used by the other communication apparatuses 10 for encryption. Any desired method for acquiring a public key may be employed.

First, the communication apparatus 10a issues a credential in response to a request from the communication apparatus 10b. The communication apparatus 10a acquires a public key of the communication apparatus 10b to which is the sending destination of the credential (subject to be certified), and associates and records the acquired public key and identification information on the issued credential (credential identification information) in a credential management table 41 (step S11). The communication apparatus 10a transmits the issued credential to the communication apparatus 10b (step S12). In order to use the service provided by the verifier using the communication apparatus 10c, the user of the communication apparatus 10b transmits the credential from the communication apparatus 10b to the communication apparatus 10c (step S13).

The verifier using the communication apparatus 10c transmits an inquiry message for confirming the validity of the credential to the communication apparatus 10b, which has sent the credential to the communication apparatus 10c (step S14). The inquiry message contains identification information on the credential. The communication apparatus 10b attaches signature information to the received inquiry message and transfers the inquiry message with the signature information to the communication apparatus 10a (step S15). The signature information is generated by encrypting identification information of a credential which is subject of the inquiry using the secret key of the communication apparatus 10b.

The communication apparatus 10a specifies the public key recorded in the credential management table 41 in association with the identification information on the credential contained in the inquiry message received from the communication apparatus 10b. The communication apparatus 10a decrypts the signature information using the specified public key. In the case where the identification information on the credential has been acquired by decrypting the signature information using the public key, the communication apparatus 10a determines to have succeeded in decrypting the signature information. In the case of having succeeded in decrypting the signature information, the communication apparatus 10a recognizes that the apparatus that has transmitted the inquiry message containing the signature information to the communication apparatus 10a is the communication apparatus 10b which has issued the credential. In the case of having succeeded in decrypting the signature information, the communication apparatus 10a transmits a notification message containing the validity of the credential to the communication apparatus 10b (step S16). The communication apparatus 10b transfers the notification message received from the communication apparatus 10a to the communication apparatus 10c (step S17). This allows the communication apparatus 10c to determine whether the credential is valid using the notification message.

On the other hand, in the case of having failed in decrypting the signature information using the public key associated with the identification information of the credential which is the subject of the inquiry, the communication apparatus 10a does not generate the notification message containing the validity of the credential. The case of failing in decrypting the signature information includes the case where the signature information has not been generated using the secret key held by the communication apparatus 10b of the user (subject to be certified) who has acquired the credential. Hence, in the communication method according to the embodiment, the communication apparatus 10, when receiving an inquiry about the validity of a credential issued by the apparatus itself from a communication apparatus other than the communication apparatus 10 that has been issued with the credential, does not give notification of the validity of the credential. For this reason, the validity of the credential is confirmed through the communication apparatus 10 that has been issued with the credential.

As illustrating FIG. 2, in the communication method according to the embodiment, the validity of the credential is confirmed through the communication apparatus 10 that has been issued with the credential. For this reason, the communication apparatus 10 that has issued the credential does not specify the communication apparatus 10 that is about to determine the validity of the credential (the communication apparatus 10 of the service provider). Hence, the communication method according to the embodiment makes it possible to notify a verifier who provides a service of the validity of a credential under the condition where the status of use of the service by the user who has acquired the credential is not speculated by the issuer of the credential.

### <Apparatus Configuration>

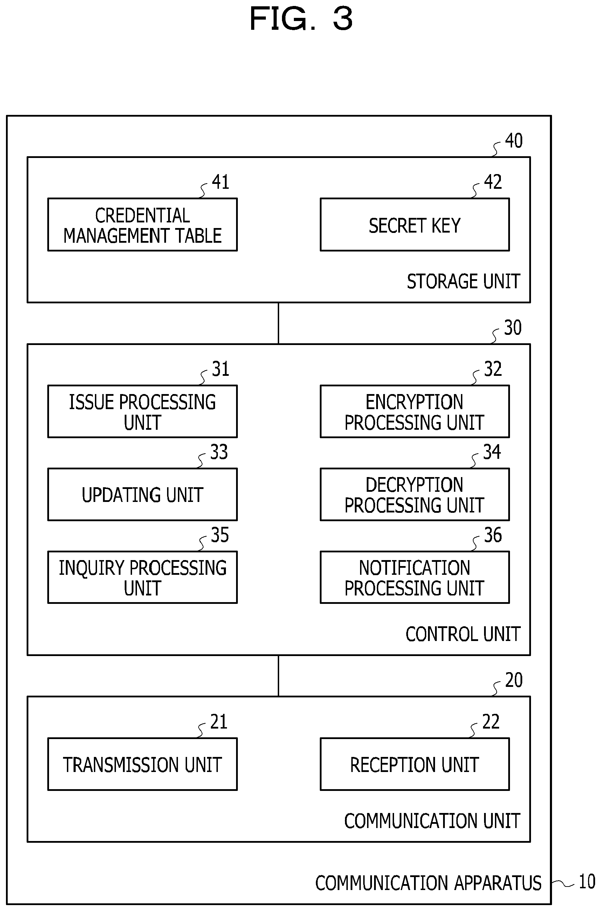

FIG. 3 is a diagram describing an example of the configuration of the communication apparatus 10. The communication apparatus 10 includes a communication unit 20, a control unit 30, and a storage unit 40. The communication unit 20 includes the transmission unit 21 and the reception unit 22. The transmission unit 21 transmits packets to other apparatuses such as the other communication apparatuses 10. The reception unit 22 receives packets from other apparatuses such as the other communication apparatuses 10.

The storage unit 40 includes the credential management table 41 and the secret key 42. When the communication apparatus 10 issues a credential, the credential management table 41 associates the identification information of the issued credential and the public key used in the distribution destination of the credential. The secret key 42 is used for encryption processing in the communication apparatus 10. For example, in the case where the communication apparatus 10 operates as an apparatus that generates a credential, the secret key 42 is used for encrypting the generated credential.

The control unit 30 includes an issue processing unit 31, an encryption processing unit 32, an updating unit 33, a decryption processing unit 34, an inquiry processing unit 35, and a notification processing unit 36. The issue processing unit 31 issues a digital credential. The issue processing unit 31 is used in the case where the communication apparatus 10 operates as a terminal for issuing a credential. The encryption processing unit 32 conducts encryption processing using the secret key 42. For example, the encryption processing unit 32 encrypts a credential generated in the issue processing unit 31. The encryption processing unit 32 also generates signature information used in the case where an inquiry message for the validity of a credential has been received from the sending destination of the credential, and the like. The updating unit 33 updates the credential management table 41 in conjunction with the issue of a credential.

The decryption processing unit 34 decrypts a credential and signature information. The decryption processing unit 34 also conducts processing for acquiring a public key used for the decryption processing. For example, in a system in which apparatuses share a distributed ledger in a network, the decryption processing unit 34 acquires information in the distributed ledger. In a system in which apparatuses in a network acquire a public key from a public key server, the decryption processing unit 34 conducts processing such as generating a request message for acquiring the public key. The inquiry processing unit 35 conducts processing to inquire the validity of a credential. The notification processing unit 36 conducts processing to generate and transfer a notification message containing the response to an inquiry message.

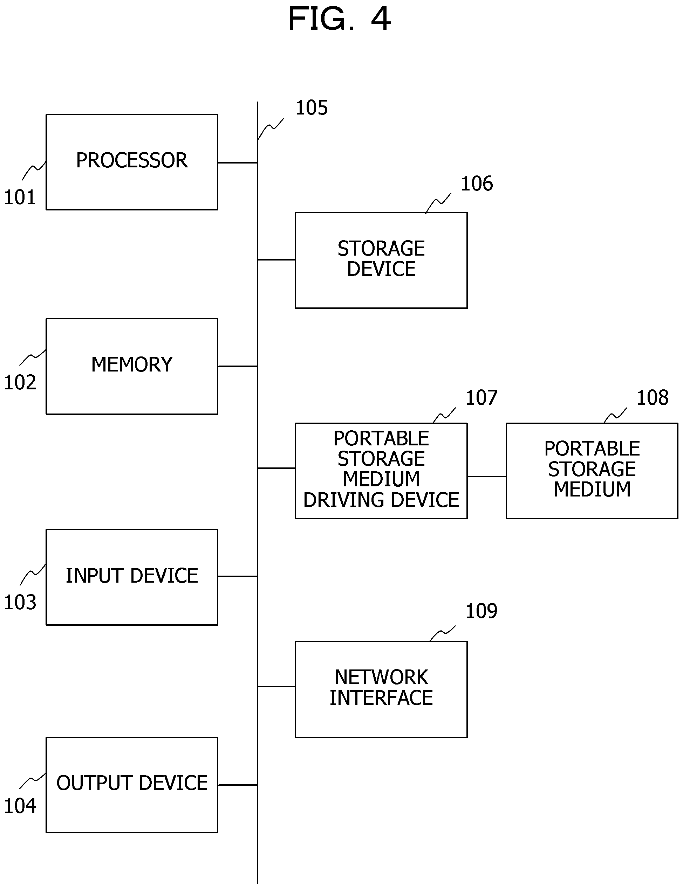

FIG. 4 is a diagram describing an example of a hardware configuration of the communication apparatus 10. The communication apparatus 10 includes a processor 101, a memory 102, a bus 105, and a network interface 109. The communication apparatus 10 may further include at least one of an input device 103, an output device 104, a storage device 106, and a portable storage medium driving device 107.

The processor 101 is any processing circuit, and may be, for example, a central processing unit (CPU). The processor 101 operates as the control unit 30. The processor 101 is able to execute programs stored in the memory 102, the storage device 106, and the like. The memory 102 appropriately stores data acquired by the operation of the processor 101 and data used for the processing of the processor 101. The storage device 106 stores programs, data, and the like, and provides the stored information to the processor 101 or the like, as appropriate. The memory 102, the storage device 106, and the like operate as the storage unit 40 in the communication apparatus 10.

The bus 105 couples the processor 101, the memory 102, the input device 103, the output device 104, the storage device 106, the portable storage medium driving device 107, and the network interface 109 to each other so that the data is able to be transmitted and received to and from each other. The input device 103 is any device used to input information, such as a keyboard, a mouse, a microphone, or a camera, and the output device 104 is any device used to output data, such as a display. The portable storage medium driving device 107 is able to output data in the memory 102, the storage device 106, and the like to a portable storage medium 108 and is able to read out programs, data, and the like from the portable storage medium 108. The portable storage medium 108 may be any portable storage medium including a compact disc recordable (CD-R) and a digital versatile disk recordable (DVD-R). The network interface 109 conducts processing to make the communication apparatus 10 communicate with other apparatuses as appropriate. The network interface 109 operates as the communication unit 20.

### <First Embodiment>

Hereinafter, a case where the communication apparatuses 10 having participated in the network share a distributed ledger and share information such as a public key using the distributed ledger is described as an example. Hereinafter, the first embodiment is described while being separating into examples of information in the distributed ledger, the distribution of a credential, inquiry about the validity of the credential, and notification of the validity of the credential. In the following example as well, the communication apparatus 10a is a communication apparatus 10 used by the issuer of the credential, and the communication apparatus 10b is an apparatus used by the user who is about to use a service. The communication apparatus 10c is supposed to be a communication apparatus 10 used by the service provider.

In the following description, in order to clarify the communication apparatus 10 that is conducting the processing, the alphabet at the end of the reference sign of the communication apparatus 10 that is conducting the processing is sometimes added at the end of the reference sign of the units of the communication apparatus 10. For example, the issue processing unit 31a is the issue processing unit 31 of the communication apparatus 10a, and the decryption processing unit 34c is the decryption processing unit 34 of the communication apparatus 10c.

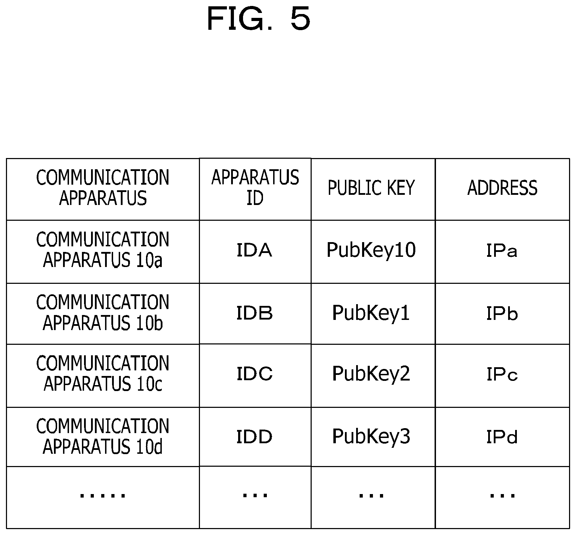

FIG. 5 is a diagram describing an example of public key information contained in the distributed ledger. The public key information illustrated in FIG. 5 is associated with a communication apparatus, apparatus ID, a public key, and an address. Apparatus ID is identification information assigned to the communication apparatus 10 in the entry. The public key is a public key paired with the secret key used for encryption by the communication apparatus 10 in the entry. The address is an address assigned to the communication apparatus 10 in the entry. For example, apparatus ID = IDA and address = IPa are assigned to the communication apparatus 10a, and the public key paired with the secret key used by the communication apparatus 10a is PubKeylO. Apparatus ID = IDB and address = IPb are assigned to the communication apparatus 10b, and the public key paired with the secret key used by the communication apparatus 10b is PubKey1. Similarly, apparatus ID = IDC and address = IPc are assigned to the communication apparatus 10c, and the public key paired with the secret key used by the communication apparatus 10c is PubKey2. Apparatus ID = IDD and address = IPd are assigned to the communication apparatus 10d, and the public key paired with the secret key used by the communication apparatus 10d is PubKey3.

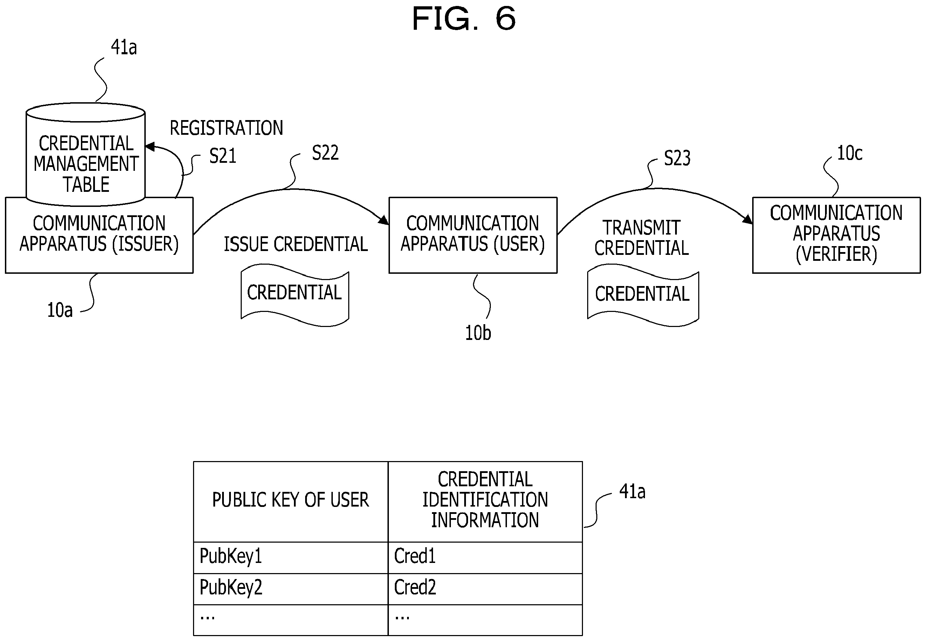

FIG. 6 is a diagram describing an example of a method of distributing a credential. First, it is supposed that the communication apparatus 10a has been requested to issue a credential to be used by the user of the communication apparatus 10b. The request for the issue of the credential to be used by the user of the communication apparatus 10b may be conducted by any method that allows the operator of the communication apparatus 10a to recognize the request. For example, a request message for issuing a credential may be transmitted from the communication apparatus 10b to the communication apparatus 10a. The operator of the communication apparatus 10a may be allowed to recognize that the issue of a credential to be used by the user of the communication apparatus 10b has been requested by a mail from the user of the communication apparatus 10b, notification of application, or the like. In this case, the operator of the communication apparatus 10a may input information for issuing the credential using the input device 103 of the communication apparatus 10a (FIG. 4).

The issue processing unit 31a issues the credential to be used by the user of the communication apparatus 10b by accessing information stored in the storage unit 40a and the like as appropriate. In the example of FIG. 6 is the identification information of the credential issued to the user of the communication apparatus 10b is supposed to be Cred1. The encryption processing unit 32a encrypts the issued credential using the secret key 42a of the communication apparatus 10a. Thereafter, the updating unit 33a acquires the public key of the communication apparatus 10b which becomes the distribution destination of the credential by accessing information in the distributed ledger (FIG. 4). In the example of FIG. 6, the updating unit 33a is supposed to have acquired the public key of PubKey1 of the communication apparatus 10b. The updating unit 33a associates the identification information of the credential issued to the communication apparatus 10b with the public key of the communication apparatus 10b and records the identification information and the public key into the credential management table 41a (step S21). By this process, the first entry of the credential management table 41 illustrated in FIG. 6 is recorded. Thereafter, the transmission unit 21a transmits the issued credential to the communication apparatus 10b (step S22).

The communication apparatus 10b stores the credential received through the reception unit 22b into the storage unit 40b as appropriate. Thereafter, in order for the user of the communication apparatus 10b to apply for the service to the communication apparatus 10c, the credential is transmitted from the communication apparatus 10b to the communication apparatus 10c (step S23). In the communication apparatus 10c, the credential is received through the reception unit 22c and data of the credential is associated with information on the transmitter of the credential and stored in the storage unit 40c.

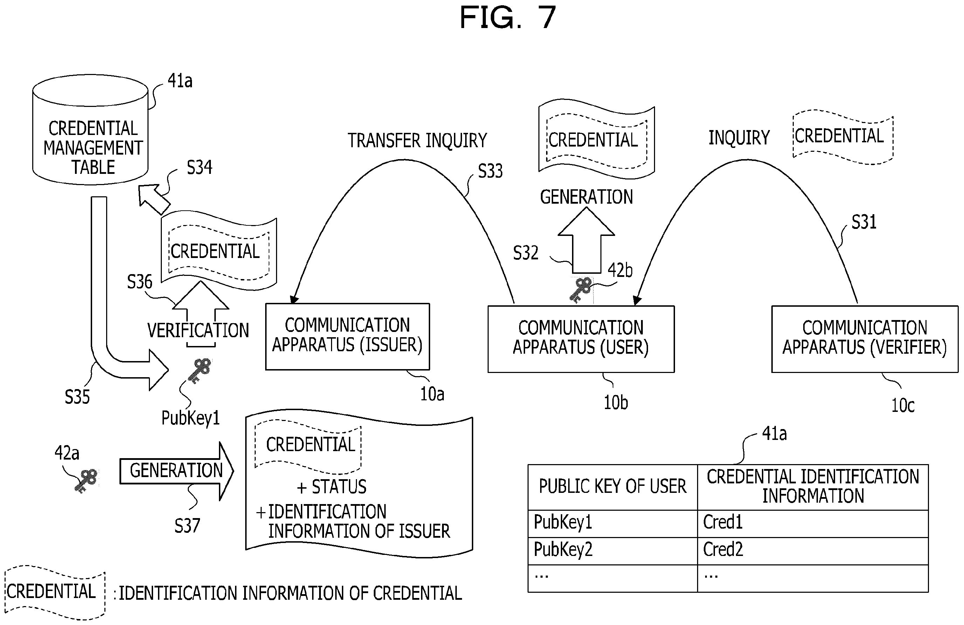

FIG. 7 is a diagram describing an example of inquiry processing for the validity of a credential. The inquiry processing unit 35c of the communication apparatus 10c generates an inquiry message containing credential identification information to be addressed to the communication apparatus 10 of the user who has transmitted the credential to the communication apparatus 10c. In the example of FIG. 7, an inquiry message for the validity of the credential of which credential identification information = Cred1 is generated to be addressed to the communication apparatus 10b. The transmission unit 21c transmits the inquiry message to the communication apparatus 10b (step S31).

After acquiring the inquiry message through the reception unit 22b, the inquiry processing unit 35b of the communication apparatus 10b extracts the credential identification information contained in the inquiry message. The encryption processing unit 32b encrypts the credential identification information extracted by the inquiry processing unit 35b with the secret key 42b to generate signature information (step S32). The inquiry processing unit 35b attaches the signature information to the inquiry message received from the communication apparatus 10c to designate the communication apparatus 10a, which is the issuer of the credential as the destination. The signature information and the inquiry message are transferred to the communication apparatus 10a (step S33).

After acquiring the inquiry message through the reception unit 22a, the inquiry processing unit 35a of the communication apparatus 10a extracts the credential identification information contained in the inquiry message. The inquiry processing unit 35a specifies the public key registered in association with the credential identification information by referring to the credential management table 41a (steps S34, S35). In the example of FIG. 7, the credential management table 41a is searched and PubKey1 is specified as the public key associated with credential identification information = Cred1. The inquiry processing unit 35a outputs the signature information received together with the inquiry message and the specified public key to the decryption processing unit 34a. The decryption processing unit 34a decrypts the signature information using the provided public key to verify whether the inquiry message has been received from the communication apparatus 10 which is the distribution destination of the credential (step S36). In the case where information obtained by decrypting the signature information using the public key and the identification information of the credential which is the subject of the inquiry coincide, the decryption processing unit 34a determines that the inquiry message has been received from the communication apparatus 10 which is the distribution destination of the credential. In the example of FIG. 7, it is supposed that Cred1, which is the identification information of the credential which is the subject of the inquiry, has been obtained by decrypting the signature information using the public key PubKey1. The notification processing unit 36a then determines that the inquiry message for the credential whose identification information = Cred1 has been received from the communication apparatus 10b which is the distribution destination of the credential.

Since the verification has succeeded, the notification processing unit 36a performs the processing to generate a notification message containing the validity (status) of the credential. The notification processing unit 36a attaches the following information to the notification message.

Identification information of the issuer: IDA (the communication apparatus 10a)

### Credential identification information: Cred1

### Status: Valid

The notification processing unit 36a outputs the credential identification information and the status of the credential to the encryption processing unit 32a. The encryption processing unit 32a encrypts the credential identification information and the status with the secret key 42a to generate signature information (step S37). The notification processing unit 36a outputs the notification message and the signature information to the transmission unit 21a to transmit these. The notification processing unit 36a designates the communication apparatus 10b as the destination of the notification message in order to generate the notification message as a response to the inquiry message.

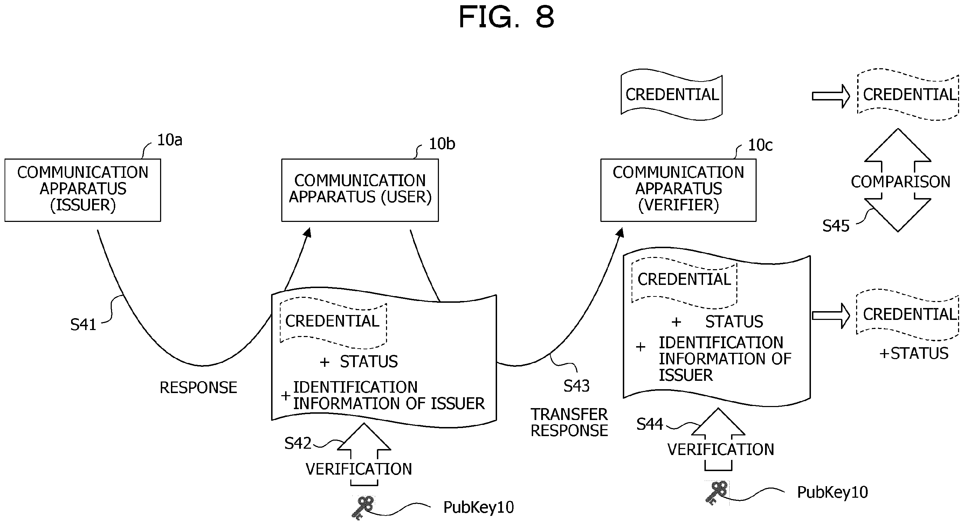

FIG. 8 is a diagram describing an example of notification processing for the validity of a credential. The transmission unit 21a of the communication apparatus 10a transmits the notification message to the communication apparatus 10b (step S41). The notification processing unit 36b of the communication apparatus 10b acquires the identification information of the issuer from the notification message to acquire the public key of the issuer. In the example of FIG. 8, since the identification information =IDA of the issuer is contained in the notification message, the notification processing unit 36b recognizes that the issuer is the communication apparatus 10a. The notification processing unit 36b acquires the public key PubKeylO of the communication apparatus 10a. The notification processing unit 36b outputs the public key PubKeylO and the signature information attached to the notification message to the decryption processing unit 34b. The decryption processing unit 34b decrypts the signature information using the public key PubKeylO. It is supposed that data obtained by decrypting the signature information is the combination of credential identification information = Cred1 and status = Valid. The notification processing unit 36b determines that the verification of the notification message has succeeded (step S42).

The notification processing unit 36b compares the credential identification information contained in the notification message and the credential identification information contained in the inquiry message transferred to the communication apparatus 10a in step S33 (FIG. 7). In the example of FIG. 8, it is supposed that the credential identification information contained in the notification message coincides with the credential identification information in the inquiry message. The notification processing unit 36b determines to transfer the notification message as a response to the inquiry message and transfers the notification message to the communication apparatus 10c through the transmission unit 21b (step S43).

The notification processing unit 36c of the communication apparatus 10c acquires identification information of the issuer from the notification message and acquires the public key PubKeylO of the communication apparatus 10a which has issued the credential. The decryption processing unit 34c decrypts the signature information using the public key PubKeylO. The notification processing unit 36c compares the credential identification information contained in data obtained by decrypting the signature information and the credential identification information contained in the notification message to determine whether the verification has succeeded. It is supposed that information obtained by decrypting the signature information is the combination of credential identification information = Cred1 and status = Valid, and that the information obtained by decrypting the signature information coincides with information in the notification message. The notification processing unit 36c determines that the verification using the signature information has succeeded (step S44).

Thereafter, the notification processing unit 36c compares the identification information of the credential which is the subject of the inquiry and the identification information of the credential contained in the notification message (step S45). The identification information of the credential which is the subject of the inquiry is the credential identification information in the inquiry message. In the case where the identification information of the credential which is the subject of the inquiry and the credential identification information contained in the notification message coincide, the notification processing unit 36c determines that the validity of the credential inquired has been provided. Hence, the communication apparatus 10c performs the following processing using the received validity. For example, in the case where the credential is valid, the decryption processing unit 34c is allowed to decrypt the credential using the public key of the issuer of the credential and specify the content certified by the credential.

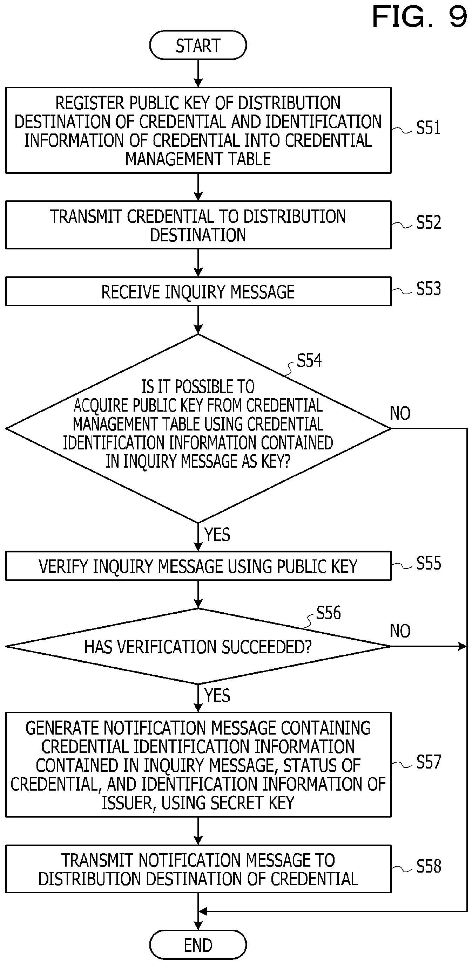

FIG. 9 is a flowchart describing an example of processing conducted by the communication apparatus 10 that issues a credential. In the example described with reference to FIGs. 6 to 8, the communication apparatus 10a conducts the processing illustrated in FIG. 9.

The issue processing unit 31 issues a credential. The updating unit 33 acquires the public key of the communication apparatus 10 which is the distribution destination of the credential by accessing information in the distributed ledger. The updating unit 33 registers the public key of the communication apparatus 10 which becomes the distribution destination of the credential and the identification information of the credential into the credential management table 41 (step S51). The transmission unit 21 transmits the credential to the communication apparatus 10 which is the distribution destination (step S52). The transmission unit 21 may transmit the credential that is encrypted using the secret key 42.

It is supposed that thereafter, the reception unit 22 has received an inquiry message (step S53). The inquiry processing unit 35 determines whether it is possible to acquire the public key from the credential management table 41 using the credential identification information contained in the inquiry message as a key (step S54). In the case where there is no public key associated with the credential identification information contained in the inquiry message in the credential management table 41, the credential of which the validity is inquired in the inquiry message is not a credential generated by the own apparatus (No in step S54). The inquiry processing unit 35 ends the processing. Hence, in the case of No in step S54, a notification message responding to the inquiry message is not transmitted.

In the case where a public key associated with the credential identification information contained in the inquiry message has been acquired from the credential management table 41, the credential of which the validity is inquired in the inquiry message is a credential generated by the own apparatus (Yes in step S54). The notification processing unit 36 conducts verification processing using the result of the decryption processing unit 34 decrypting the inquiry message using the public key (step S55). In the case where the verification has failed, since the inquiry message has not been send from the communication apparatus 10 which is the distribution destination of the credential, the inquiry processing unit 35 ends the processing (No in step S56).

On the other hand, it is supposed that the verification of the inquiry message has succeeded (Yes in step S56). In this case, the inquiry message has been sent from the communication apparatus 10 which is the distribution destination of the credential. The notification processing unit 36 generates a notification message containing the credential identification information contained in the inquiry message, the status of the credential, and the identification information of the issuer, using the secret key 42 (Yes in step S56, step S57). The transmission unit 21 transmits the notification message to the communication apparatus 10 which is the distribution destination of the credential (step S58).

The processing illustrated in FIG. 9 is an example, and may be changed in accordance with the implementation. For example, in the case of No in step S54 or S56, the inquiry processing unit 35 may notify the transmitter of the inquiry message of an error.

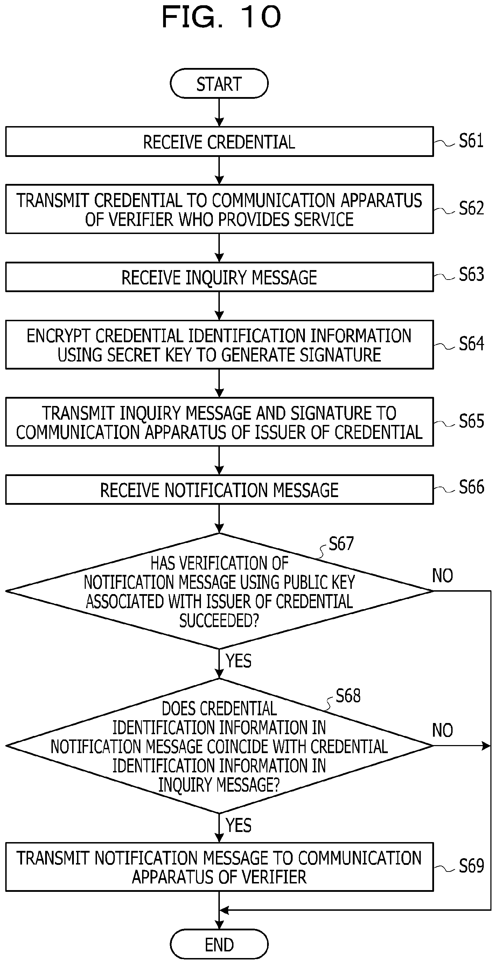

FIG. 10 is a flowchart describing an example of processing conducted by the communication apparatus that is used by the user of the service. In the example described with reference to FIGs. 6 to 8, the communication apparatus 10b conducts the processing illustrated in FIG. 10.

The reception unit 22 of the communication apparatus 10 used by the user who has requested the issue of a credential receives the credential (step S61). The received credential is stored in the storage unit 40 in association with information on the communication apparatus 10 which is the issuer of the credential. The transmission unit 21 transmits the credential to the communication apparatus 10 of the verifier who provides the service (step S62).

It is supposed that thereafter an inquiry message for the credential has been received from the communication apparatus 10 of the verifier who provides the service (step S63). The encryption processing unit 32 encrypts the credential identification information in the inquiry message using the secret key 42 to generate a signature (step S64). The transmission unit 21 transmits the inquiry message and the signature to the communication apparatus 10 which is the issuer of the credential (step S65).

Thereafter, the reception unit 22 receives a notification message transmitted from the communication apparatus 10 of the issuer of the credential (step S66). The notification processing unit 36 determines whether the verification of the notification message using the public key associated with the communication apparatus 10 of the issuer of the credential has succeeded (step S67). In the verification of the notification message, the decryption processing unit 34 decrypts signature information attached to the notification message with the public key associated with the communication apparatus 10 of the issuer of the credential. The notification processing unit 36 compares information obtained by decrypting the signature information and information in the notification message to determine whether the verification has succeeded. When the verification of the notification message has failed, the notification processing unit 36 ends the processing (No in step S67).

When the verification of the notification message has succeeded, the notification processing unit 36 determines whether the credential identification information in the notification message coincides with the credential identification information in the inquiry message received in step S63 (Yes in step S67, step S68). In the case where the credential identification information in the notification message and the credential identification information in the inquiry message do not coincide, the notification processing unit 36 ends the processing (No in step S68).

On the other hand, in the case where the credential identification information in the notification message and credential identification information in the inquiry message coincide, the notification message contains the validity of the credential inquired by the inquiry message (Yes in step S68). The notification processing unit 36 transmits the notification message to the communication apparatus 10 of the verifier through the transmission unit 21 (step S69).

The processing illustrated in FIG. 10 is an example, and may be changed in accordance with the implementation. For example, in the case of No in step S67 or S68, the notification processing unit 36 may notify the source communication apparatus of the notification message of an error.

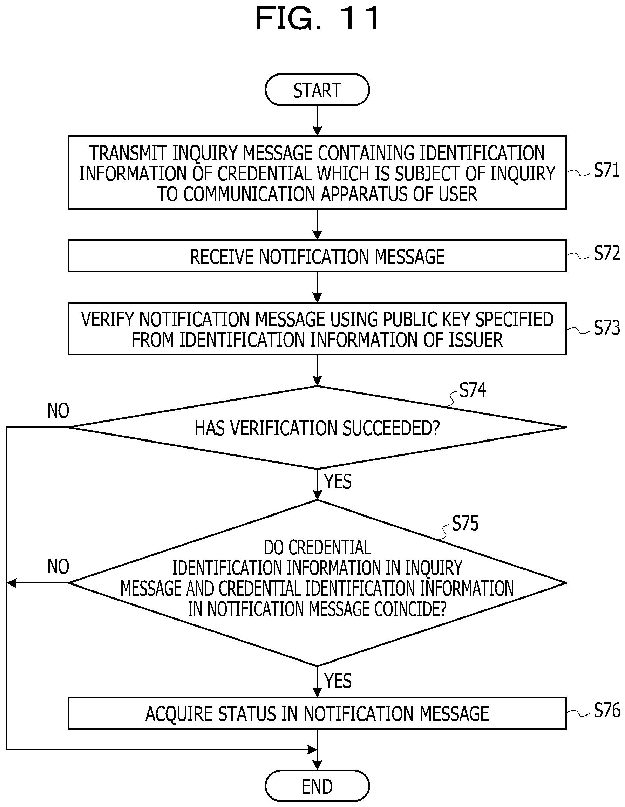

FIG. 11 is a flowchart describing an example of processing conducted by the communication apparatus that is used by the service provider. In the example described with reference to FIGs. 6 to 8, the communication apparatus 10c conducts the processing illustrated in FIG. 11.

The inquiry processing unit 35 transmits an inquiry message containing identification information of a credential which is the subject of the inquiry to the communication apparatus 10 of the transmitter of the credential (the communication apparatus 10 used by the service user) (step S71).

It is supposed that thereafter, the reception unit 22 has received a notification message (step S72). The notification processing unit 36 verifies the notification message using the public key specified from the identification information of the communication apparatus 10 of the issuer of the credential (step S73). In the verification of the notification message, the decryption processing unit 34 decrypts signature information attached to the notification message with the public key associated with the communication apparatus 10 of the issuer of the credential. The notification processing unit 36 compares information obtained by decrypting the signature information and information in the notification message to determine whether the verification has succeeded. In the case where the verification has failed, since there is a possibility that the notification message has been tampered with, the notification processing unit 36 ends the processing (No in step S74).

On the other hand, in the case where the verification has succeeded, the notification message has not been tampered with (Yes in step S74). The notification processing unit 36 determines whether the credential identification information in the inquiry message and the credential identification information in the notification message coincide (step S75). In the case where the credential identification information in the inquiry message and the credential identification information in the notification message do not coincide, since information on the validity of the credential which is the subject of the inquiry has not provided, the notification processing unit 36 ends the processing (No in step S75).

In the case where the credential identification information in the inquiry message and the credential identification information in the notification message coincide, the information on the validity of the credential which is the subject of the inquiry has been provided (Yes in step S75). The notification processing unit 36 acquires the status information in the notification message (step S76).

As described above, in the communication method according to the embodiment, the validity of the credential is confirmed through the communication apparatus 10 that has been issued with the credential. This makes it possible for the communication apparatus 10 that intends to determine the validity of a credential to acquire the validity of the credential without allowing the other communication apparatus 10 of the issuer of the credential to specify that the apparatus intends to acquire the validity of the credential. In the above description, the case where there is one type of a verifier who provides a service has been described as an example, the same effects are achieved even when there are a plurality of verifiers who provide services in a network.

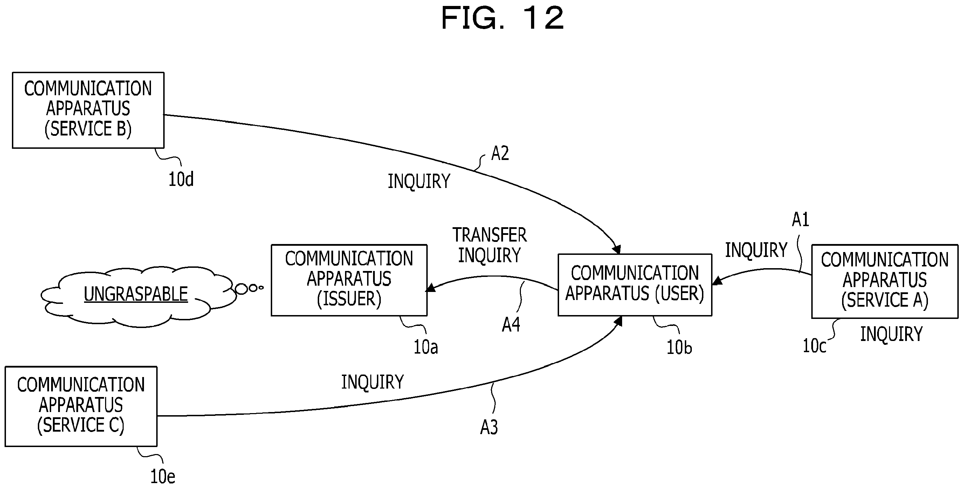

FIG. 12 is a diagram describing an example of a communication method according to an embodiment. In the example of FIG. 12, communication apparatuses 10a to 10e are contained in a network. It is supposed that the communication apparatus 10c is a communication apparatus 10 of a verifier who provides a service A and the communication apparatus 10d is a communication apparatus 10 of a verifier who provides a service B. The communication apparatus 10e is a communication apparatus 10 of a verifier who provides a service C. The communication apparatus 10a is a communication apparatus 10 used by an issuer of a credential, and it is supposed that a user of the communication apparatus 10b has acquired the credential from the issuer using the communication apparatus 10a. It is supposed that the user using the communication apparatus 10b has transmitted the credential to the communication apparatuses 10c to 10e in order to use the services A to C.

In the case of FIG. 12, each of the communication apparatuses 10c to 10e performs inquiry processing to confirm the validity of the credential, and all of the communication apparatuses 10c to 10e transmit inquiry messages to the communication apparatus 10b (arrows A1 to A3). For the inquiry message received from any of the communication apparatuses 10c to 10e, the communication apparatus 10b transfers the inquiry message to the communication apparatus 10a, which is the issuer of the credential, together with a signature generated using a secret key 42b (arrow A4). Hence, the issuer using the communication apparatus 10a notifies the communication apparatus 10b of the validity of the credential under the condition where the service the user using the communication apparatus 10b intends to use is not specified. The communication apparatus 10b transfers a notification message containing information on the validity of the credential to the transmitter of the inquiry message. Hence, the communication method according to the embodiment makes it possible for a user who has acquired a credential to notify a verifier who provides a service of the validity of the credential under the condition where the status of use of the service by the user is not speculated by the issuer of the credential.

Since the signature of the issuer of the credential is also attached to the notification message, the signature is also transferred when the notification message is transferred from the communication apparatus 10 of the user. This makes it possible for the communication apparatuses 10c to 10e of the verifiers to determine whether the notification message has been tempered with, verifying the notification message. Hence, although the notification message is transferred through the communication apparatus 10b of the user, in the case where the communication apparatus 10b has tampered with the notification message, an error occurs when the communication apparatus 10 of the verifier verifies the notification message. Therefore, the notification message is not allowed to be tampered with by the user.

### <Second Embodiment>

In the first embodiment, the notification message is not associated with the inquiry message which has caused the issue of the notification message. Hence, there is a possibility that the communication apparatus 10 that has received an inquiry message for the validity of a credential takes advantage of, as a response to the received inquiry message, a notification message which was sent as a response to another inquiry message processed in the past.

For example, it is supposed that the communication apparatus 10b transmits a credential identified by credential identification information = Cred1 to both of the communication apparatus 10c and the communication apparatus 10d. It is supposed that thereafter, an inquiry message M1 is transmitted from the communication apparatus 10c to inquire the validity of the credential of credential identification information = Cred1. It is supposed that the inquiry message M1 is processed as described in the first embodiment, so that a notification message M2 is transmitted from the communication apparatus 10a to the communication apparatus 10b. The communication apparatus 10b is allowed to transmit the notification message M2 to the communication apparatus 10c as a response to the inquiry message M1. It is supposed that thereafter, an inquiry message M3 is transmitted to the communication apparatus 10b in order for the communication apparatus 10d to inquire the validity of the credential of credential identification information = Cred1. At this time, it is possible for the communication apparatus 10b to transmit the notification message M2 to the communication apparatus 10d without transferring the inquiry message M3 to the communication apparatus 10a. In this case, the communication apparatus 10d processes the notification message M2 as a response to the inquiry message M3.

When the notification message is taken advantage of, and the validity of the credential of credential identification information = Cred1 varies between the time when the inquiry message M1 is transmitted and the time when the inquiry message M3 is transmitted, a problem occurs. For example, when the credential of credential identification information = Cred1 is valid at the time when the inquiry message M1 is transmitted, information that status = Valid is added to the notification message M2. It is supposed that thereafter, although the credential of credential identification information = Cred1 becomes invalid at the time when the inquiry message M3 is transmitted, the communication apparatus 10b transfers the notification message M2 to the communication apparatus 10d as a response to the inquiry message M3. The communication apparatus 10d falsely recognizes the validity of the credential of credential identification information = Cred1.

In the second embodiment, an embodiment that utilizes a random value (nonce) so that a notification message obtained as a response to a first inquiry message does not taken advantage of as a response to a second inquiry message is described.

In the second embodiment as well, the processing to issue and distribute a credential is the same as in the first embodiment. In the second embodiment as well, it is supposed that the communication apparatus 10a is used by the issuer of a credential and the communication apparatus 10b is used by the user who uses the service. It is supposed that the communication apparatus 10c is used by the service provider.

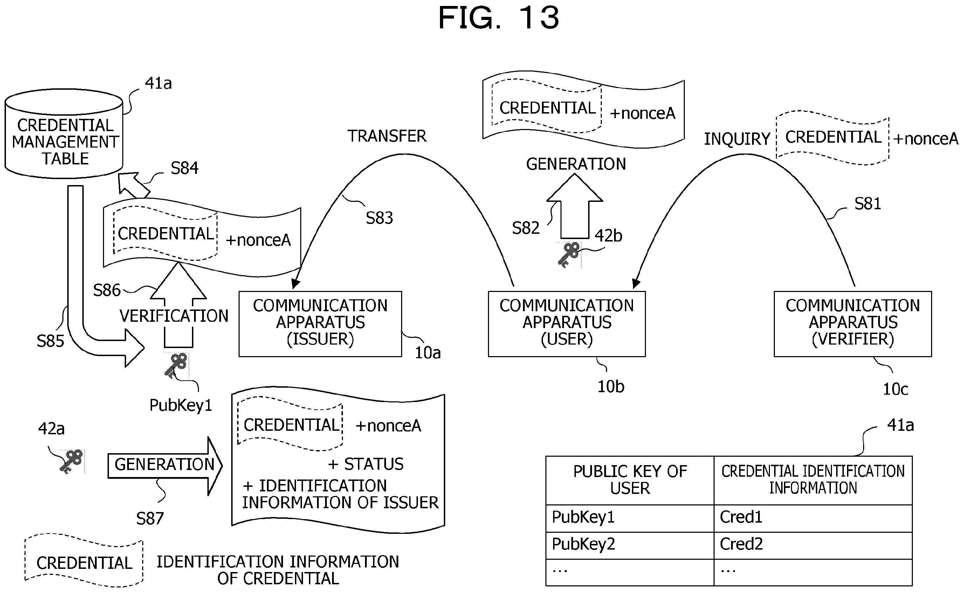

FIG. 13 is a diagram describing an example of inquiry processing for the validity of a credential in the second embodiment. Hereinafter, it is supposed that an inquiry for the validity of a credential identified by credential identification information = Cred1 has occurred. It is supposed that at the time of occurrence of the inquiry, the communication apparatus 10a has a credential management table 41a illustrated in FIG. 13.

The inquiry processing unit 35 of the communication apparatus 10c generates nonce usable for identifying an inquiry message. Nonce is supposed to be generated by any known method. It is supposed that a value of nonceA has been generated as the nonce value. In this case, the inquiry processing unit 35c generates an inquiry message containing credential identification information and nonce as described below.
Credential identification information: Cred1
Nonce: nonceA

The inquiry processing unit 35c transmits the generated inquiry message to the communication apparatus 10b which is the transmitter of the credential (step S81).

The encryption processing unit 32b of the communication apparatus 10b encrypts the credential identification information and the nonce contained in the received inquiry message with the secret key 42b to generate signature information (step S82). The inquiry processing unit 35b transfers the inquiry message and the signature information received from the communication apparatus 10c to the communication apparatus 10a (step S83).

After acquiring the inquiry message and the signature information through the reception unit 22a, the inquiry processing unit 35a of the communication apparatus 10a extracts the credential identification information and the nonce from the inquiry message. The inquiry processing unit 35a specifies the public key associated with the credential identification information by referring to the credential management table 41a (steps S84, S85). The method of specifying a public key in the second embodiment is the same as in the first embodiment. In the example of FIG. 13, it is supposed that the public key PubKey1 is specified. The decryption processing unit 34a decrypts the signature information using the specified public key and compares the signature information with information in the inquiry message to verify whether the inquiry message has been received from the communication apparatus 10 which is the distribution destination of the credential (step S86). When the combination of the credential identification information and the nonce in the inquiry message coincides with the information obtained by the decryption processing, the decryption processing unit 34a determines that the inquiry message has been received from the communication apparatus 10 which is the distribution destination of the credential.

In the case where the combination of the credential identification information and the nonce in the inquiry message coincides with the information obtained by the decryption processing, the notification processing unit 36a performs the processing to generate the notification message containing the credential identification information, the nonce value, and the validity of the credential. It is supposed that the notification message containing the following information has been generated.
Identification information of the issuer: IDA (the communication apparatus 10a)
Credential identification information: Cred1
Nonce: nonceA
Status: Valid

The encryption processing unit 32a encrypts the combination of the credential identification information, the nonce, and the status with the secret key 42a to generate signature information (step S87).

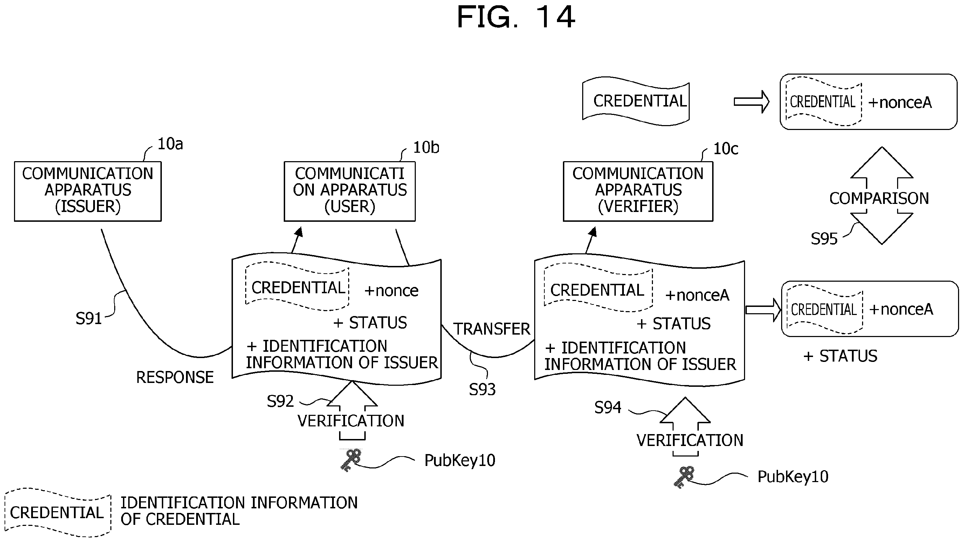

FIG. 14 is a diagram describing an example of notification processing for the validity of a credential in the second embodiment. The transmission unit 21a of the communication apparatus 10a transmits the notification message and the signature information to the communication apparatus 10b (step S91).

The notification processing unit 36b of the communication apparatus 10b acquires the identification information of the issuer in the notification message by the same processing as in the first embodiment to acquire the public key of the issuer. In the example of FIG. 14, the public key PubKeylO of the communication apparatus 10a is specified. The decryption processing unit 34b decrypts the signature information received together with the notification message using the public key PubKeylO. It is supposed that data obtained by decrypting the signature information coincides with the combination of credential identification information = Cred1, nonce = NonceA, status = Valid. The notification processing unit 36b determines that the verification of the notification message has succeeded (step S92).

The notification processing unit 36b compares the combination of the credential identification information and the nonce contained in the notification message with the combination of the credential identification information and the nonce contained in the inquiry message transferred to the communication apparatus 10a in step S83 (FIG. 13). In the example of FIG. 14, it is supposed that the combination of the credential identification information and the nonce contained in the notification message coincides with the combination of the credential identification information and the nonce in the inquiry message. The notification processing unit 36b transfers the notification message to the communication apparatus 10c through the transmission unit 21b (step S93). The signature information transmitted together with the notification message is also transferred to the communication apparatus 10c.

The notification processing unit 36c of the communication apparatus 10c acquires identification information of the issuer from the notification message to acquire the public key PubKeylO of the communication apparatus 10a which has issued the credential. The decryption processing unit 34c decrypts the signature information using the public key PubKeylO. When the combination of the credential identification information and the nonce contained in data obtained by decrypting the signature information coincides with the combination of the credential identification information and the nonce contained in the notification message, the notification processing unit 36c determines that the verification has succeeded. It is supposed that the notification processing unit 36c determines that the verification using the signature information has succeeded (step S94).

The notification processing unit 36c compares the combination of the credential identification information and the nonce in the notification message with the combination of the credential identification information and the nonce contained in the inquiry message transmitted in step S81 of FIG. 13 (step S95). For example, in the case of FIG. 14, the notification message contains credential identification information = Cred1 and nonce =nonceA. On the other hand, the nonce contained in the inquiry message transmitted by the communication apparatus 10c to inquire the validity of the credential identified by credential identification information = Cred1 in step S81 of FIG. 13 is also NonceA. In the case where the combination of the credential identification information and the nonce in the notification message coincides with the combination of the credential identification information and the nonce contained in the inquiry message, the notification processing unit 36c determines that the validity of the credential inquired has been provided. Hence, the communication apparatus 10c conducts the following processing using the received validity.

On the other hand, in the case where the combination of the credential identification information and the nonce value does not coincide between the notification message and the inquiry message, the communication apparatus 10 has not received the notification message generated in response to the inquiry message transmitted by the own apparatus. For example, it is supposed that the inquiry message contains credential identification information = Cred1 and nonce = nonceA while the notification message contains credential identification information = Cred1 and nonce = nonceB. In this case, the value of nonce does not coincide between the inquiry message and the notification message. The notification processing unit 36c is thus allowed to specify that the communication apparatus 10b which has transferred the notification message has taken advantage of the notification message acquired in the past for credential identification information = Cred1. In this case, the notification processing unit 36c does not use information representing the validity in the notification message as the status of the credential inquired.

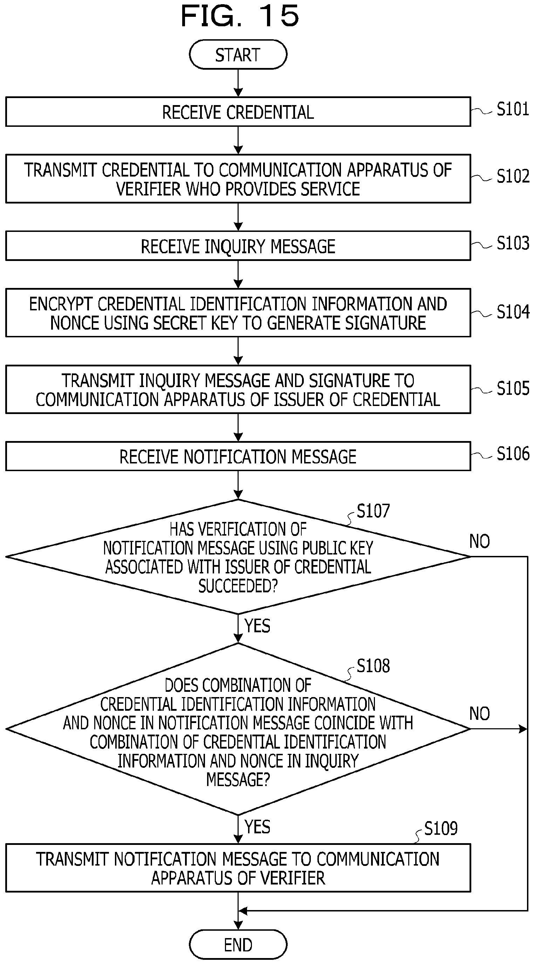

FIG. 15 is a flowchart describing an example of processing conducted by the communication apparatus that is used by the service user. In the example described with reference to FIGs. 13 to 14, the communication apparatus 10b conducts the processing illustrated in FIG. 15. The processing in steps S101 to S103 is the same as the processing in steps S61 to S63 described with reference to FIG. 10.

The encryption processing unit 32 encrypts the credential identification information and the nonce in the inquiry message using the secret key 42 to generate a signature (step S104). The transmission unit 21 transmits the inquiry message and the signature to the communication apparatus 10 which is the issuer of the credential (step S105).

Thereafter, the reception unit 22 receives a notification message transmitted from the communication apparatus 10 of the issuer of the credential (step S106). The notification processing unit 36 determines whether the verification of the notification message using the public key associated with the communication apparatus 10 of the issuer of the credential has succeeded (step S107). In the case where the verification of the notification message has failed, since there is a possibility that the notification message has been tampered with, the notification processing unit 36 ends the processing (No in step S107).

On the other hand, in the case where the verification of the notification message has succeeded, the notification message is not tampered with (Yes in step S107). The notification processing unit 36 determines whether the combination of the credential identification information and the nonce in the notification message coincides with the combination of the credential identification information and the nonce in the inquiry message received in step S103 (step S108). In the case where the combination of the credential identification information and the nonce does not coincide between the notification message and the inquiry message, since the notification message generated in response to the transmitted inquiry message is not generated, the notification processing unit 36 ends the processing (No in step S108).

On the other hand, in the case where the combination of the credential identification information and the nonce coincides between the notification message and the inquiry message, the notification message generated in response to the inquiry message transmitted has been received (Yes in step S108). The notification processing unit 36 transmits the notification message to the communication apparatus 10 of the verifier through the transmission unit 21 (step S109).

The processing illustrated in FIG. 15 is an example, and may be changed in accordance with the implementation. For example, the processing may be modified such that in the case of No in step S107 or S108, the notification processing unit 36 may notify the transmitter of the notification message of an error.

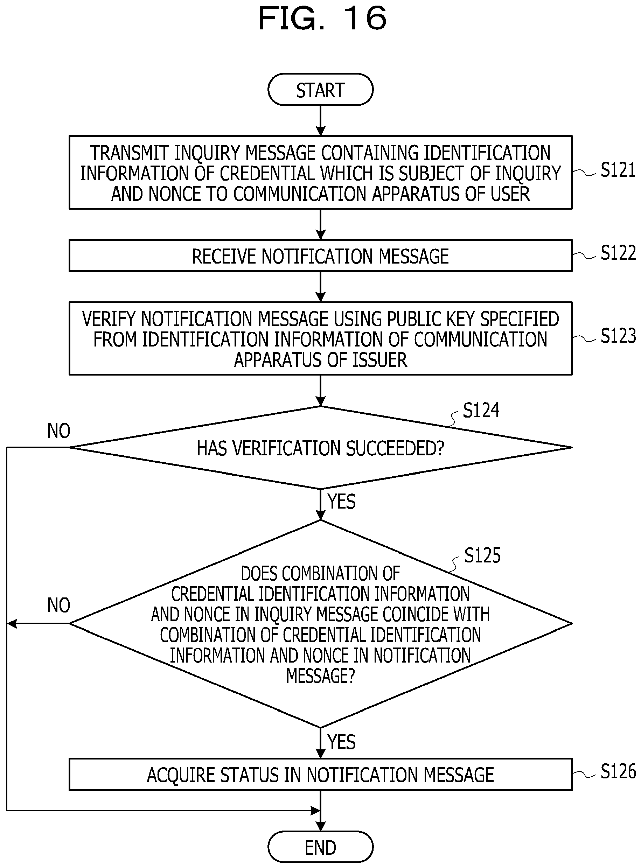

FIG. 16 is a flowchart describing an example of processing conducted by the communication apparatus that is used by the service provider. In the example described with reference to FIGs. 13 to 14, the communication apparatus 10c conducts the processing illustrated in FIG. 16.

The inquiry processing unit 35 transmits an inquiry message containing nonce and identification information of a credential which is the subject of the inquiry to the communication apparatus 10 of the transmitter of the credential (the communication apparatus 10 used by the service user) (step S121). The processing in steps S122 to S124 is the same as the processing in steps S72 to S74 described with reference to FIG. 11.

In the case where the verification has succeeded in step S124, the notification message has not been tampered with (Yes in step S124). The notification processing unit 36 determines whether the combination of the credential identification information and the nonce in the inquiry message coincides with the combination of the credential identification information and the nonce in the notification message (step S125). In the case where the combination of the credential identification information and the nonce does not coincide between the inquiry message and the notification message, the notification message generated in response to the inquiry message transmitted has not been received (No in step S125). In this case, there is a possibility that the communication apparatus 10 of the transferor of the notification message (the communication apparatus 10 of the user) has taken advantage of the notification message received in the past. The notification processing unit 36 ends the processing of the notification message.

On the other hand, in the case where the combination of the credential identification information and the nonce coincides between the inquiry message and the notification message, the notification message generated in response to the inquiry message transmitted has been received (Yes in step S125). The notification processing unit 36 acquires status information in the notification message (step S126).

As described above, in the communication method according to the second embodiment, the inquiry message contains random nonce that is different from that of the other inquiry messages. The communication apparatus 10 of the issuer of the credential adds credential identification information and nonce in the inquiry message that has triggered the generation of a notification message into the notification message. In the case where nonce different from the nonce in the inquiry message is added to the notification message, the communication apparatus 10 that conducts the verification processing is allowed to determine that the notification message generated in response to the transmitted inquiry message has not been received. Therefore, in the second embodiment, a notification message generated in response to an inquiry message transferred in the past is not taken advantage of even when credential identification information is the same. This makes it impossible to forge the validity of a credential by taking advantage of a notification message.

In the communication method according to the second embodiment as well, the validity of the credential is confirmed through the communication apparatus 10 that has been issued with the credential. This makes it possible for the communication apparatus 10 that intends to determine the validity of a credential to acquire the validity of the credential without allowing the other communication apparatus 10 of the issuer of the credential to specify that the apparatus intends to acquire the validity of the credential.

### <Others>

The embodiment is not limited to the above, and may be variously modified. Some examples thereof will be described below.

Although the system in which a public key is shared using a distributed ledger has been described as an example in the above description, the communication method according to the embodiments may be achieved by a system in which an apparatus in a network acquires a public key from a public key server. In the system including a public key server, a distributed ledger does not have to be shared in a network of communication apparatuses 10.

The formats of the tables, messages, digital credentials, and the like described above are only examples, and may be changed depending on the implementation. For example, tables, messages, and digital credentials may include information elements other than the information elements described above, and may not include some of the illustrated information elements.

In the above description, the processing performed by the communication apparatus 10 is described separately for easy understanding, but any communication apparatus 10 may issue, transmit, and verify a digital credential.

All examples and conditional language provided herein are intended for the pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A communication program causing a second communication apparatus that is capable of communicating with a first communication apparatus to perform processes of:
issuing a credential that is used by a user of the first communication apparatus;
storing identification information of the credential in association with a second key that is usable for decrypting information encrypted with a first key that is used by the first communication apparatus for encryption; and
when signature information attached to an inquiry message inquiring whether a credential identified by the identification information is valid is decryptable with the second key, transmitting information representing whether the credential identified by the identification information is valid to the first communication apparatus.

2. The communication program according to claim 1, wherein
other identification information is contained in decrypted data obtained by decrypting the signature information with the second key, and
the communication program causes the second communication apparatus to perform a process of:
when the identification information contained in the inquiry message and the other identification information coincide, determining that the signature information is decryptable with the second key.

3. The communication program according to claim 1, wherein
the inquiry message contains a first value that is different from one inquiry message to another,
other identification information and a second value is contained in decrypted data obtained by decrypting the signature information with the second key, and
the communication program causing the second communication apparatus to perform processes of:
when the identification information contained in the inquiry message and the other identification information coincide and the second value and the first value coincide, determining that the signature information is decryptable using the second key; and
notifying the first communication apparatus of information in which information representing whether a credential identified by the identification information is valid and the first value are associated with each other.

4. The communication program according to any one of claims 1 to 3, wherein
the second communication apparatus does not notify the first communication apparatus of information representing whether a credential identified by the identification information is valid when the signature information is not decryptable with the second key associated with the identification information.

5. A communication program causing a first communication apparatus that is used by a user who intends to use a service to perform processes of:
acquiring a credential to be used for applying for use of the service from a second communication apparatus that is capable of acquiring a second key that is capable of decrypting information encrypted by the first communication apparatus using a first key;
transmitting the credential to a third communication apparatus that provides the service;
when an inquiry message that contains identification information of the credential and inquires the validity of the credential, transmitting signature information obtained by encrypting the identification information using the first key and the inquiry message to the second communication apparatus; and
when a notification message that gives notice of the validity of a credential identified by the identification information, transmitting the notification message to the third communication apparatus.

6. The communication program according to claim 5, causing the first communication apparatus to perform processes of:
when the notification message from the second communication apparatus, determining whether first identification information that identifies a credential of which the validity has been provided by the notification message and second identification information that identifies a credential of which the validity has been inquired by the inquiry message; and
when it is determined that the first identification information and the second identification information coincide, transmitting the notification message to the third communication apparatus.

7. The communication program according to claim 6, wherein
the inquiry message contains a first value that is different from one inquiry message to another,
the communication program causing the first communication apparatus to perform processes of:
when the notification message from the second communication apparatus, further determining whether the first value and a second value contained in the notification message coincide; and
when the first identification information and the second identification information coincide and the first value and the second value coincide, transmitting the notification message to the third communication apparatus.

8. A communication method comprising:
causing a second communication apparatus that has issued a credential used by a user of a first communication apparatus to store identification information of the credential in association with a second key that is usable for decrypting information encrypted with a first key that is used by the first communication apparatus for encryption; and
causing the first communication apparatus, upon receipt of an inquiry message that inquires the validity of the credential from a third communication apparatus that is a transmission destination of the credential, to transmit signature information obtained by encrypting the identification information of the credential using the first key and the inquiry message to the second communication apparatus; and
causing the second communication apparatus, in a case where the signature information is decryptable with the second key, to transmit information representing the validity of a credential identified by the identification information to the first communication apparatus.

9. A communication apparatus configured to communicate with a first communication apparatus, comprising:
a processor configured to issue a credential that is used by a user of the first communication apparatus; and
a memory configured to store identification information of the credential in association with a second key that is usable for decrypting information encrypted with a first key that is used by the first communication apparatus for encryption; and
a transmitter configured to transmit a notification to the first communication apparatus when signature information attached to an inquiry message inquiring whether a credential identified by the identification information is valid is decryptable with the second key, the notification containing information representing whether the credential identified by the identification information is valid.
